# EUROPÄISCHE PATENTANMELDUNG

(11) **EP 1 298 427 A1**
(43) Veröffentlichungstag der Anmeldung: **02.04.2003**
(21) Anmeldenummer: 01810942.1
(22) Anmeldetag: 27.09.2001
(51) Int. Cl.: G01N 9/36, H01M 8/04

(54) **Verfahren zur Beurteilung der Konzentration einer flüssigen Lösung und Verwendung dieses Verfahrens**

(71) Anmelder: ABB RESEARCH LTD., 8050 Zürich (CH); E.I. DU PONT DE NEMOURS AND COMPANY, Wilmington Delaware 19898 (US)
(72) Erfinder: Ohler, Christian, 5400 Baden (CH); Killer, Eric, 5430 Wettingen (CH); Unternaehrer, Peter, 5436 Würenlos (CH)
(74) Vertreter: ABB Patent Attorneys

(57) **Zusammenfassung**

Die vorliegende Anmeldung betrifft ein Verfahren zur Beurteilung der Konzentration einer Flüssigkeit oder eines Feststoffes mit einer ersten Dichte, gelöst in einem Lösungsmittel mit einer von der ersten verschiedenen Dichte. Basierend auf dem Prinzip eines Galilei-Thermometers werden Körper (K₁-K₅) unterschiedlicher Dichte in die Lösung (SL) eingetaucht und aus ihren Positionen Rückschlüsse auf die Dichte der Lösung beziehungsweise deren Konzentration gezogen. Das Verfahren eignet sich insbesondere zur einfachen und zuverlässigen Regelung des Methanolgehaltes in einer Direkt-Methanol-Brennstoffzelle (10).

## Beschreibung

### TECHNISCHES GEBIET

Die vorliegende Erfindung betrifft ein Verfahren zur Beurteilung der Konzentration von Lösungen eines Feststoffes oder einer Flüssigkeit in einem flüssigen Lösungsmittel gemäss dem Oberbegriff des Patentanspruchs 1. Ihre Anwendung auf die Regelung der Methanolkonzentration in Direkt-Methanol-Brennstoffzellensystemen bezieht sich auf das Gebiet der Brennstoffzellentechnologie.

### STAND DER TECHNIK

Als Alternative zu fossilen Energieträgern hat Methanol CH₃OH gegenüber Wasserstoff H₂ den Vorteil, dass es unter üblichen Umgebungsbedingungen flüssig ist und die bestehende Infrastruktur zur Verteilung und Lagerung genutzt werden kann. Zudem sind die Anforderungen an die Sicherheit wesentlich günstiger als bei Wasserstoff. Für einen Einsatz in Wasserstoff-Brennstoffzellen ist die Erzeugung von Wasserstoff aus Methanol am Einsatzort selbst mittels Reformierung zwar durchaus machbar, weist aber ein verzögertes Kaltstartverhalten auf.

Bei sogenannten Direkt-Methanol-Brennstoffzellen (Direct Methanol Fuel Cells DMFC) wird Methanol direkt elektrochemisch oxidiert, d.h. ohne den vorhergehenden Zwischenschritt einer Reformierung zu H₂. Im Allgemeinen wird mit einer verdünnten Methanollösung gearbeitet, wobei die Lösung zirkuliert und durch Zuführung von konzentriertem Methanol die für einen optimalen Betrieb gewünschte Konzentration geregelt wird. Zur Bestimmung der Methanolkonzentration sind Verfahren bekannt, welche die dielektrischen Eigenschaften oder die Dichte der Methanollösung auswerten.

Galileische Thermometer werden zur Anzeige der Raumtemperatur genutzt. Ihre Funktionsweise beruht auf dem Archimedischen Prinzip, wonach jeder feste Körper in flüssiger Umgebung einen Auftrieb erfährt, der dem Gewicht der durch den Körper verdrängten Flüssigkeit entspricht. Der Betrag des Auftriebs wird demnach durch die Dichte des festen Körpers und die Dichte der Flüssigkeit bestimmt. Die Dichte ihrerseits ändert mit der Temperatur, wobei diese Änderung bei einer Flüssigkeit wesentlich höher ausfällt als bei einem festen Körper.

Bei Galileischen Thermometern wird diese Abhängigkeit ausgenutzt, indem sich in einer transparenten Flüssigkeit mehrere Körper mit untereinander geringfügig verschiedenen Dichten befinden. Bei einer Temperaturänderung der Flüssigkeit ändert sich deren Dichte über einen Bereich hinweg, in welchem die Dichten der einzelnen Körper liegen, woraus ein Aufschwimmen oder Absinken der Körper erfolgt. Die Körper sind oft als Hohlkörper ausgebildet, welche teilweise mit einer Füllflüssigkeit oder mit Partikeln gefüllt sind. Die mittlere Dichte der Körper lässt sich in diesem Fall mit geringem Aufwand lediglich durch eine Variation der Füllhöhe sehr genau einstellen.

### DARSTELLUNG DER ERFINDUNG

Aufgabe der vorliegenden Erfindung ist es, ein Verfahren zur Beurteilung der Konzentration einer Lösung eines Stoffes in einem flüssigen Lösungsmittel zu schaffen, welches auf der Konzentrationsabhängigkeit der Dichte der Lösung beruht sowie einfach und ausfallsicher ist. Weiter ist es Aufgabe der Erfindung, ein Verfahren zur Regelung der Methanolkonzentration eines Direkt-Methanol-Brennstoffzellensystems mit denselben Eigenschaften zu schaffen. Diese Aufgaben werden durch ein Verfahren mit den Merkmalen des Patentanspruchs 1 und eine Verwendung dieses Verfahrens mit den Merkmalen des Patentanspruchs 9 gelöst.

Kern der Erfindung ist es, zur Beurteilung der Konzentration der Lösung eines Stoffes in einem flüssigen Lösungsmittel ein Galileisches Thermometer einzusetzen. Dies bedingt natürlich, dass die Dichte des Feststoffes oder der Flüssigkeit, welche im Lösungsmittel gelöst ist, von der Dichte des Lösungsmittels verschieden ist. Je nach der gewünschten Präzision der Beurteilung werden ein oder mehrere Körper mit unterschiedlichen Dichten in die Lösung gegeben. Aus den resultierenden Positionen - auf der Oberfläche der Lösung aufschwimmend oder auf den Grund der Lösung abtauchend - der Körper wird die Konzentration beurteilt, d.h. zumindest eine obere oder untere Grenze bestimmt oder gar näherungsweise der exakte Konzentrationswert ermittelt. Insbesondere ist eine Beurteilung einer Konzentrationsänderung, beispielsweis infolge eines Verbrauchs des gelösten Stoffes oder einer Evaporation des Lösungsmittels, einfach möglich.

Zur Detektion der Position der eingetauchten Körper sind neben optischen auch weitere berührungsfreie Verfahren geeignet, insbesondere mittels magnetischer oder kapazitiver Näherungssensoren. Diese befinden sich vorteilhafterweise unterhalb der Lösung, beispielsweise im Boden des Behälters, in welchem sich die Lösung befindet, und detektieren die An- oder Abwesenheit der gesunkenen Körper. Dabei brauchen die aufschwimmenden Körper, deren exakte Position auch vom Füllstand der Lösung abhängt, nicht berücksichtigt zu werden.

Gemäss einer vorteilhaften Ausführungsform werden die Dichten der Körper so gewählt, dass sie der Dichte der Lösung bei einer mittleren Temperatur, aber unterschiedlichen Vergleichskonzentrationen des gelösten Stoffes entsprechen. Ist die tatsächliche Temperatur zum Zeitpunkt der Beobachtung ungefähr gleich der genannten mittleren Temperatur, so liegt die zu beurteilende Konzentration zwischen den Vergleichskonzentrationen der aufschwimmenden und der gesunkenen Körper. Wird nur ein Körper eingesetzt, dessen Dichte einer mittleren Konzentration entspricht, und ist die Dichte des gelösten Stoffes höher als die Dichte des Lösungsmittels, so kann folgende Aussage gemacht werden: Schwimmt der Körper auf der Oberfläche auf, liegt die tatsächliche Konzentration der Lösung über der mittleren Konzentration, andernfalls darunter.

Um für einen grösseren Temperaturbereich zu verlässlichen Aussagen zu gelangen, wird für mehrere unterschiedliche Vergleichstemperaturen jeweils eine Untermenge umfassend einen oder mehrere Körper mit unterschiedlichen Dichten eingetaucht. Ein separates Thermometer zeigt an, welche Untermenge bei der Beurteilung der Konzentration zu beachten ist.

Um die Anzahl der erforderlichen Körper in diesem Fall minimal zu halten, können Körper mit unterschiedlichen Dichten jeweils zwei oder mehreren Vergleichstemperaturen zugeordnet werden. Dann zeigen ihre Positionen- je nach vorliegender Temperatur - das Unter- beziehungsweise Überschreiten unterschiedlicher Konzentrationen an.

Gemäss einer weiteren vorteilhaften Ausführungsform wird ebenfalls mit einem separaten Thermometer die Temperatur der Lösung gemessen. Die Dichten der Körper sind so bemessen, dass sie bei unterschiedlichen Vergleichstemperaturen jeweils der Dichte der Lösung bei einer festen mittleren Konzentration entsprechen. Wiederum wird gemäss der tatsächlichen Temperatur nur ein Körper zur Beurteilung der Konzentration beachtet, wobei die Aussage in diesem Fall wiederum lautet: Schwimmt der Körper auf der Oberfläche auf, liegt die tatsächliche Konzentration der Lösung über der mittleren Konzentration, andernfalls darunter.

Das erfindungsgemässe Verfahren ist insbesondere für eine Beurteilung des Methanolgehalts einer Lösung von Methanol in Wasser geeignet. Die Temperaturabhängigkeit der Dichte einer Methanollösung ist nämlich klein gegenüber ihrer Konzentrationsabhängigkeit. So verringert sich beispielsweise die Dichte einer Methanollösung bei einem Anstieg der Konzentration um ein Prozent um etwa denselben Betrag wie bei einer Temperaturerhöhung um 10°C. Zur Abdeckung eines gewissen Temperaturbereiches genügen somit relativ wenige unterschiedliche Vergleichstemperaturen beziehungsweise Untermengen an Körpern.

Das Verfahren wird geeigneterweise zur Regelung der Methanolkonzentration in Direkt-Methanol-Brennstoffzellen eingesetzt, bei welchen in der zirkulierenden Methanollösung das Methanol in einer unbekannten Rate verbraucht wird. Meistens ist bei derartigen Systemen bereits ein günstiges Temperaturmessgerät zur Bestimmung der Lösungstemperatur vorhanden. Erfindungsgemäss wird bei dieser Regelung der Methanolkonzentration auf eine Bestimmung der exakten Ist-Konzentration verzichtet. Somit ist eine der oben dargestellten Beurteilungen der Konzentration oder von Konzentrationsänderungen, insbesondere relativ zu einem bekannten Soll-Konzentrationswert der Methanollösung, weitgehend ausreichend für die Entscheidung, ob und wenn ja wieviel konzentriertes Methanol zur Lösung zugegeben werden soll.

Vorteilhafte Ausführungsformen sind Gegenstand der abhängigen Patentansprüche.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig. 1 eine Anordnung zur erfindungsgemässen Konzentrationsbeurteilung, und
Fig.2 ein Direkt-Methanol-Brennstoffzellensystem zu deren erfindungsgemässen Einsatz.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

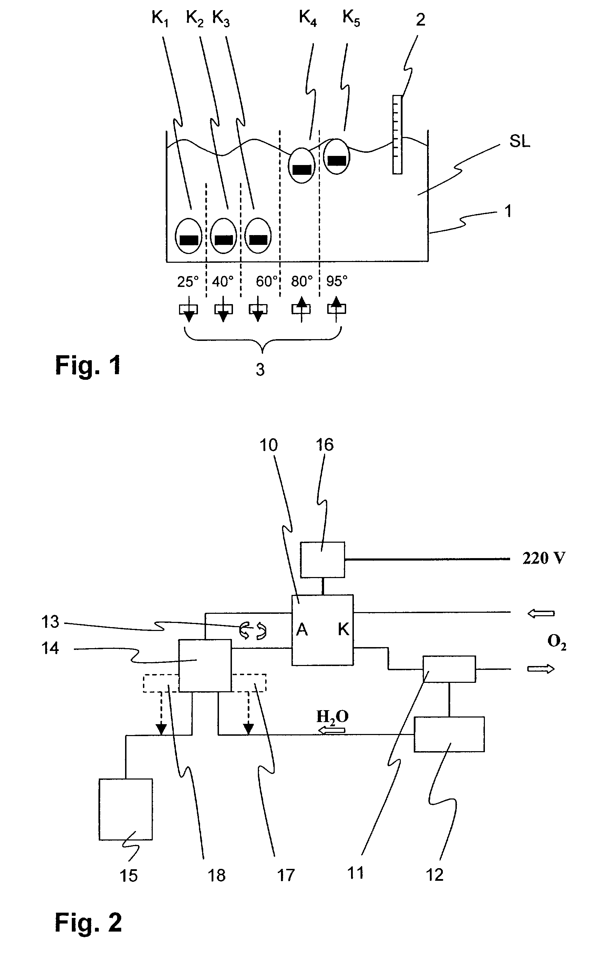

In Fig.1 ist eine mögliche Abwandlung eines sogenannten Galilei-Thermometers zur Beurteilung der Konzentration C einer Lösung SL dargestellt. Fünf Körper Kₙ, n=1...5, mit unterschiedlichen Dichten ρₙ sind eingetaucht in die Lösung SL, welche sich in einem Behälter 1 befindet. Jeder Körper Kₙ weist eine Dichte ρₙ auf, welche gleich der Dichte der Lösung SL bei einer bestimmten mittleren Konzentration Cₘ und einer von fünf unterschiedlichen Vergleichstemperaturen Tₙ (25, 40, 60, 80 oder 95°C) ist. Mittels eines Temperaturmessgerätes 2 wird die Temperatur T der Lösung SL bestimmt. Für die Beurteilung der Konzentration C ist nun derjenige Körper Kₚ massgebend, dessen äquivalente Vergleichstemperatur Tₚ am nächsten bei der tatsächlich gemessenen Temperatur T liegt. Beträgt Letztere zwischen 50 und 70°C, so ist dies der Körper K₃ mit T₃ = 60°C. Die Position jedes Körper, aufschwimmend ↑ oder abgesunken ↓, wird mit einem Näherungssensor 3 ermittelt. Im dargestellten Fall ist der Körper K₃ auf den Boden des Behälters 1 abgesunken, woraus man schliessen kann, dass die interessierende tatsächliche Konzentration C der Lösung SL unterhalb der mittleren Konzentration Cₘ liegt.

Die dargestellte Beurteilungsweise ist fehlerbehaftet. So ist es denkbar, dass beispielsweise bei einer Temperatur T von 69°C die temperaturbedingte Abnahme der Dichte Δρ_{T} der Lösung gegenüber ihrem Wert bei 60°C eine konzentrationsbedingte Zunahme der Dichte Δρ_{C} gegenüber dem mittleren Wert Cₘ übertrifft und aus der Position von Körper K₃ der falsche Schluss gezogen wird (Konzentrationsabnahme). Deratige Fehlerquellen sind um so bedeutender, je grösser die Temperaturabhängigkeit der Dichte der Lösung (dρ/Dt) ist und je grösser die Distanz zwischen zwei aufeinanderfolgenden Vergleichstemperaturen (Tᵢ-Tᵢ₋₁) ist.

Fig.2 zeigt ein Direkt-Methanol-Brennstoffzellensystem mit einem Brennstoffzellenstapel 10, wie es insbesondere für einen autarken Betrieb (stand alone) vorgesehen ist. Kathodenseitig wird mit einem nicht dargestellten Gebläse Sauerstoff O₂ vorzugsweise als Bestandteil von Luft zugeführt. Das in der Abluft vorhandene Wasser wird in einem Kondensator 11 wieder abgeschieden und in einen Wassertank 12 geführt. Die anodenseitige Methanollösung wird in einem Anodenkreislauf 13 zirkuliert, zu welchem ein Methanollösungsreservoir 14 als Puffer gehört. Sowohl das Wasser wie auch die Methanollösung werden durch nicht dargestellte Pumpen bewegt. Das Methanollösungsreservoir 14 wird bei Bedarf mit konzentriertem Methanol aus einem Methanoltank 15 und Wasser aus dem Wassertank 12 nachgefüllt. Nur der Methanoltank 15 muss bei diesem autarken System periodisch wieder von extern aufgefüllt werden. Der Brennstoffzellenstapel 10 ist über einen Wechselrichter 16 an einen Stromkreis mit einem nicht dargestellten Verbraucher elektrisch angeschlossen.

Die elektrochemische Reaktion in den Brennstoffzellen 10 konsumiert je nach Last beziehungsweise bezogenener Leistung Methanol. Zudem diffundieren sowohl Methanol wie Wasser in unbekannter Rate durch den Elektrolyten zur Kathode. Aus diesen Gründen muss erstens der Füllstand im Methanollösungsreservoir 14 mit einem Niveausensor 17 überwacht und gegebenenfalls ein Nachfüllen durch Wasserzugabe aus dem Wassertank 12 veranlasst werden. Zudem muss die korrekte Methanolkonzentration, typischerweise zwischen 0.5 und 5 Gewichtsprozent, zumindest annähernd gehalten werden. Erfindungsgemäss wird zur kontinuierlichen Regelung der Methanolkonzentration M ein zusätzlicher Sensor 18 eingesetzt, welcher nach dem oben beschriebenen Prinzip arbeitet und eine Konzentrationsabhängigkeit der Dichte der Methanollösung auswertet. Der Sensor 18 erlaubt eine für die Regelung ausreichende Beurteilung der Methanolkonzentration, insbesondere von Abweichungen gegenüber einem Soll-Wert oder zeitliche Änderungen, und verzichtet dabei auf eine exakte Bestimmung des aktuellen Ist-Wertes.

### BEZUGSZEICHENLISTE

- 1: Behälter
- 2: Temperaturmessgerät
- 3: Näherungssensor
- 10: Brennstoffzellenstapel
- 11: Kondensator
- 12: Wassertank
- 13: Anodenkreislauf
- 14: Methanollösungsreservoir
- 15: Methanoltank
- 16: Wechselrichter
- 17: Niveausensor
- 18: Methanolkonzentrationssensor
- C: Konzentration
- SL: Lösung

## Patentansprüche

1. Verfahren zur Beurteilung einer Konzentration (C) einer Lösung (SL) eines Feststoffes (S) oder einer Flüssigkeit (L) in einem Lösungsmittel, dessen Dichte von derjenigen des Feststoffes (S) oder der Flüssigkeit (L) verschieden ist,
**dadurch gekennzeichnet, dass** in die Lösung (SL) eine Menge von N Körpern eingetaucht werden, wobei N ≥ 1 ist und jeder Körper (Kₙ) eine Dichte (ρₙ) aufweist, welche der Dichte der Lösung (SL) bei bestimmten Kombinationen von Temperatur (Tₙ) und Konzentration (Cₙ) entspricht, und dass aus einer Position (↑, ↓) mindestens eines Körpers (Kₚ) die Konzentration (C) des gelösten Feststoffes (S) oder der gelösten Flüssigkeit (L) in der Lösung (SL) beurteilt wird.

2. Verfahren nach Anspruch 1, **dadurch gekennzeichnet, dass** die Position (↑, ↓) des mindestens einen Körpers (Kₚ) mittels eines Näherungssensors (3) detektiert wird.

3. Verfahren nach Anspruch 2, **dadurch gekennzeichnet, dass** die Position (↑, ↓) des mindestens einen Körpers (Kₚ) mittels eines Näherungssensors (3), welcher im Boden oder unterhalb eines die Lösung (SL) enthaltenden Behälters (1) angeordnet ist, detektiert wird.

4. Verfahren nach Anspruch 1, **dadurch gekennzeichnet, dass** die Dichten (ρₙ) der N Körper einer Folge von monoton aufsteigenden Vergleichskonzentrationen (Cₙ) für eine mittlere Temperatur (Tₘ) entsprechen, und dass die Konzentration (C) der Lösung (SL) als oberhalb der grössten Konzentration (Cₚ) der aufschwimmenden Körper und unterhalb der kleinsten Konzentration (Cₚ₊₁) der gesunkenen Körper liegend beurteilt wird.

5. Verfahren nach Anspruch 4, **dadurch gekennzeichnet, dass** mittels eines separaten Temperaturmessgeräts (2) eine Temperatur (T) der Lösung (SL) gemessen wird, dass für mindestens zwei Vergleichstemperaturen (T;) jeweils eine Untermenge von Nᵢ Körpern eingetaucht wird, wobei Nᵢ ≥ 1 ist, und dass die Konzentration (C) der Lösung (SL) anhand derjenigen Untermenge von Nₚ Körpern beurteilt wird, deren Vergleichstemperatur (Tₚ) am nächsten bei der gemessenen Temperatur (T) liegt.

6. Verfahren nach Anspruch 5, **dadurch gekennzeichnet, dass** mindestens einer der Körper zwei zu verschiedenen Vergleichstemperaturen (Tᵢ, Tⱼ) gehörenden Untermengen (Nᵢ, Nⱼ) zugeordnet ist.

7. Verfahren nach Anspruch 1, **dadurch gekennzeichnet, dass** mittels eines separaten Temperaturmessgeräts (2) eine Temperatur (T) der Lösung (SL) gemessen wird, dass die Dichten (ρₙ) der N Körper einer Folge von monoton aufsteigenden Vergleichstemperaturen (Tₙ) bei einer mittleren Konzentration (Cₘ) entsprechen, und dass derjenige Körper (Kₚ) selektiert wird, dessen Vergleichstemperatur (Tₚ) am nächsten bei der gemessenen Temperatur (T) liegt und die Konzentration (M) der Mischung je nach der Position (↑, ↓) des selektierten Körpers (Kₚ) als unterhalb oder überhalb der mittleren Konzentration (Cₘ) liegend beurteilt wird.

8. Verfahren nach einem der Ansprüche 1-7, **dadurch gekennzeichnet, dass** die gelöste Flüssigkeit Methanol und das Lösungsmittel Wasser ist.

9. Verwendung eines Verfahrens nach Anspruch 8 zur Regelung der Methanolkonzentration (C) eines Direkt-Methanol-Brennstoffzellensystems mit mindestens einer Brennstoffzelle und einem separaten Methanolreservoir (15), wobei je nach Beurteilung der Konzentration (C) der Lösung (SL) Methanol aus dem Methanolreservoir (15) zugeführt wird.
